# FASCICULE DE BREVET EUROPEEN

(11) **EP 3 186 108 B1**
(45) Date de publication et mention de la délivrance du brevet: **29.09.2021**
(21) Numéro de dépôt: 15767204.9
(22) Date de dépôt: 03.08.2015
(51) Int. Cl.: B60Q 3/64, B60Q 3/74, B60R 13/02, F21V 3/00, F21Y 101/00

(54) **VÉHICULE AUTOMOBILE COMPRENANT UN DISPOSITIF D'ILLUMINATION**
KRAFTFAHRZEUG MIT EINER BELEUCHTUNGSVORRICHTUNG
VEHICLE COMPRISING A LIGHTING DEVICE

(30) Priorité: 25.08.2014 FR 1457962
(43) Date de publication de la demande: 05.07.2017
(73) Titulaire: PSA Automobiles SA, 78300 Poissy (FR)
(72) Inventeur: GONCALVES, Whilk Marcelino, 75013 Paris (FR); LE DALL, Christophe, 92150 Suresnes (FR); SCHNEIDER, Stephanie, 92150 Suresnes (FR)
(86) Numéro de dépôt international: PCT/FR2015/052145
(87) Numéro de publication internationale: WO 2016/030601

(56) Documents cités:
- WO-A1-2014/102466
- CN-Y- 201 151 365
- DE-A1- 19 807 348
- DE-A1-102008 021 127
- DE-A1-102009 043 350
- US-A- 1 906 568
- US-A- 4 086 483
- US-A- 4 942 744
- US-A- 5 140 220
- US-A1- 2008 198 606
- None

## Description

La présente invention concerne de manière générale un véhicule comprenant un dispositif d'illumination destiné à illuminer une garniture intérieure de pavillon. Ce dispositif d'illumination a pour but de créer une ambiance lumineuse par projection d'une image sur la zone intérieure du pavillon du véhicule.

Il est connu dans l'art antérieur des dispositifs d'illumination par réfraction d'une lumière émise par une source lumineuse. Par exemple, le document US 2013/0258676 A1 divulgue un corps transparent qui diffuse de la lumière émise par une LED. En contrepartie, ce système présente notamment l'inconvénient de présenter des aberrations chromatiques, et de ne pas procurer d'images nettes si l'encombrement total est réduit, comme c'est le cas dans un véhicule automobile.

Un but de la présente invention est de répondre aux inconvénients de l'art antérieur mentionnés ci-dessus et en particulier, tout d'abord, de proposer un dispositif d'illumination compact qui permette d'illuminer une partie intérieure d'un habitacle de véhicule avec des images nettes et sans aberrations chromatiques.

Pour cela un premier aspect de l'invention concerne un véhicule automobile comprenant un dispositif d'illumination tel que décrit dans la revendication 1. Le dispositif d'illumination d'une partie d'un habitacle de voiture tel qu'une garniture de pavillon, comprend:
- au moins une source lumineuse agencée pour émettre de la lumière
- au moins un corps transparent agencé pour réfracter la lumière émise par la source lumineuse, et est tel que ladite au moins une source lumineuse est une source de lumière cohérente. Le dispositif utilise une source de lumière cohérente, ce qui veut dire que la lumière émise présente une seule longueur d'onde. De ce fait, même si le corps transparent présente un indice de réfraction variable en fonction de la longueur d'onde, les images obtenues seront nettes et sans aberration chromatique, même après passage de la lumière cohérente au travers du corps transparent. De plus en raison de la grande luminance de telles sources lumineuses, la netteté des images obtenues est améliorée.

Avantageusement, la source lumineuse émet un faisceau parallèle de lumière cohérente. Un tel faisceau parallèle (ni divergent, ni convergent), permet de former des images bien nettes.

La source lumineuse est une diode laser ou une fibre optique couplée à une source laser. Le dispositif selon cette mise en œuvre est particulièrement compact, et permet, dans le cas de l'utilisation de fibre optique, de déporter la source laser, une diode laser par exemple, et de l'utiliser pour plusieurs corps transparents.

Ledit au moins un corps transparent comprend au moins une surface incidente agencée pour recevoir la lumière émise par ladite au moins une source lumineuse, et ladite au moins une surface incidente est agencée pour diriger la lumière cohérente selon une pluralité de directions dans ledit au moins un corps transparent. Cette mise en œuvre permet d'obtenir une illumination avec des motifs, car la lumière incidente reçue est divisée en plusieurs faisceaux à l'intérieur du corps transparent.

Avantageusement, ledit au moins un corps transparent comprend une cavité agencée pour loger ladite au moins une source lumineuse, la cavité comprenant ladite au moins une surface incidente. Toute la lumière émise est transmise au corps transparent, et la compacité est améliorée.

Ladite au moins une surface incidente est au moins partiellement grainée et/ou présente au moins en partie une rugosité arithmétique d'au moins 0.2 micromètres. Cette mise en œuvre permet de diffuser le faisceau de lumière cohérente dans de multiples directions de manière économique. La mesure de la rugosité arithmétique (notée Ra) est simple. Il est à noter que la zone grainée ou rugueuse reçoit au moins une partie du faisceau de lumière cohérente, donc la zone de mesure de la rugosité sera celle qui reçoit le faisceau de lumière. En d'autres termes, si la source lumineuse est en regard d'une grande surface formant la surface incidente, la rugosité n'est importante et à mesurer que sur la zone de cette surface incidente qui reçoit effectivement la lumière incidente.

Avantageusement, ladite au moins une surface incidente comprend une pluralité de stries.

Avantageusement, ladite au moins une surface incidente comprend une pluralité de prismes.

Ledit au moins un corps transparent comprend au moins une surface émettrice agencée pour émettre vers l'habitacle la lumière émise par ladite au moins une source lumineuse et reçue par ladite au moins une surface incidente, et dans lequel ladite au moins une surface émettrice comprend au moins deux faces planes non parallèles. Une taille du corps transparent en forme de cristal permet avantageusement de diffuser la lumière cohérente sur une grande surface avec des motifs.

Ladite au moins une source lumineuse est couplée au dit au moins un corps transparent.

Avantageusement, le dispositif d'illumination comprend une pluralité de sources lumineuses, avec au moins une source lumineuse agencée pour émettre une lumière cohérente d'une longueur d'onde différente de la longueur d'onde de la lumière émise par les autres sources lumineuses. Cette mise en œuvre permet de varier les couleurs à la demande de l'utilisateur. On peut envisager de déporter les sources lumineuses en utilisant une ou plusieurs fibres optiques entre le ou les corps(s) transparent(s) et chacune des sources lumineuses.

Avantageusement, le dispositif d'illumination est agencé dans un pilier ou un montant de carrosserie du véhicule.

D'autres caractéristiques et avantages de la présente invention apparaîtront plus clairement à la lecture de la description détaillée qui suit de plusieurs modes de réalisation de l'invention donnés à titre d'exemples nullement limitatifs et illustrés par les dessins annexés, dans lesquels :
- les figures 1a et 1b représentent chacune une mise en œuvre d'un dispositif d'illumination selon l'invention ;
- la figure 2 représente un premier exemple de corps transparent pour un dispositif d'illumination de l'une des figures 1a ou 1b ;
- la figure 3 représente un deuxième exemple de corps transparent pour un dispositif d'illumination de l'une des figures 1a ou 1b.

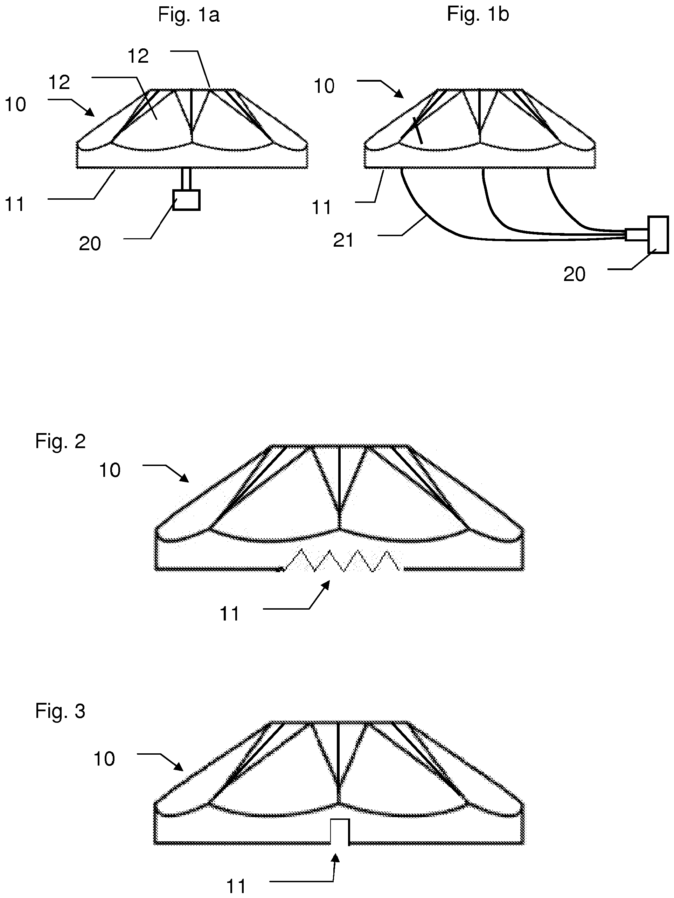

La figure 1a représente une première mise en œuvre d'un dispositif d'illumination, qui comprend un corps transparent 10 accouplé à une source lumineuse qui est une diode laser 20. La diode laser 20 émet un faisceau de lumière cohérente, dont les rayons sont parallèles, directement sur une surface inférieure du corps transparent 10, qui forme ainsi une surface incidente 11.

Le corps transparent 10 peut être réalisé dans une multitude de matériaux, comme des cristaux à base de silice, du verre, du poly(méthacrylate de méthyle), souvent abrégé en PMMA, ou du polycarbonate par exemple.

La surface incidente 11 est agencée pour diviser le faisceau de lumière cohérente à son entrée dans le corps transparent 10, de sorte à obtenir dans le corps transparent 10 plusieurs faisceaux de lumière cohérente se propageant selon plusieurs directions différentes. Il est à noter que seule la portion de la surface inférieure en regard de la diode laser 20 reçoit de la lumière de cette dernière et doit donc être prévue pour séparer ou diviser le faisceau de lumière reçue.

Comme visible sur la figure 1a, le corps transparent 10 comprend plusieurs faces émettrices 12, planes et inclinées les unes par rapport aux autres. Cela permet, en association avec la surface incidente 11 qui divise ou éclate la lumière émise par la diode laser 20 à son entrée dans le corps transparent 10, d'obtenir une multitude de faisceaux émis et réfractés en sortie du corps transparent 10. On peut alors obtenir une image projetée avec de nombreux motifs.

L'utilisation de lumière cohérente émise par une diode laser 10 de haute luminance, avec un corps transparent qui divise la lumière à son entrée pour ensuite la réfracter permet d'obtenir des images nettes et sans aberration chromatique que l'on peut projeter sur une surface proche, comme la surface intérieur d'un pavillon de véhicule, et ce depuis un pilier ou un montant du véhicule.

La figure 1b représente une deuxième mise en œuvre d'un dispositif d'illumination selon l'invention. Dans le cas représenté figure 1b, la diode laser 20 est déportée du corps transparent 10, et une pluralité de fibres optiques 21 sont intercalées entre le corps transparent 10 et la diode laser 20 pour transmettre la lumière émise. On peut alors multiplier le nombre de points d'entrée de lumière dans le corps transparent 10, ou envoyer la lumière d'une seule diode laser 20 vers plusieurs corps transparents. Il est également à noter que la compacité et/ou la flexibilité de conception du dispositif sont améliorées.

La figure 2 représente un exemple de corps transparent 10, et notamment la surface incidente 11 qui est agencée pour recevoir la lumière cohérente. Dans le cas représenté, la surface incidente 11 comprend une pluralité de stries, ou de prismes pour diviser le faisceau de la lumière émise par la diode laser 20. On peut envisager de dépolir ou grainer la surface incidente 11 pour obtenir la même fonction de division ou d'éclatement du faisceau de lumière incidente.

La figure 3 représente un corps transparent 10 avec une cavité pour recevoir la diode laser 20, afin d'augmenter la compacité du dispositif. Dans ce cas, la surface incidente 11 est au fond de la cavité ou sur les côtés de cette dernière, et peut être grainée pour orienter la lumière émise par la diode laser 20 dans plusieurs directions au sein du corps transparent 10.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Véhicule automobile comprenant un dispositif d'illumination et un pavillon, comprenant :
- au moins une diode laser (20) ou une fibre optique (21) couplée à une source laser agencée pour émettre de la lumière ; et
- au moins un corps transparent (10) agencé pour réfracter la lumière émise par la diode laser (20) ou la fibre optique (21) couplée à une source laser, comprenant au moins une surface incidente (11) agencée pour recevoir la lumière émise par la diode laser (20) ou la fibre optique (21) couplée à une source laser, et dans lequel ladite au moins une surface incidente (11) est agencée pour diriger la lumière cohérente selon une pluralité de directions dans ledit au moins un corps transparent (10),
ledit corps transparent (10) comprenant en outre plusieurs surfaces émettrices (12) agencées pour projeter vers la zone intérieur du pavillon une image avec plusieurs motifs, les surfaces émettrices comportant au moins deux faces planes non parallèles
**caractérisé en ce que**
le dispositif d'illumination permet d'obtenir des motifs projetés sur la zone intérieure du pavillon du véhicule automobile de manière à créer une ambiance lumineuse, ladite au moins une surface incidente (11) est au moins partiellement grainée et/ou présente au moins en partie une rugosité arithmétique d'au moins 0.2 micromètres.

2. Véhicule automobile selon la revendication précédente, dans lequel ledit au moins un corps transparent (10) comprend une cavité agencée pour loger ladite au la diode laser (20) ou la fibre optique (21) couplée à une source laser, la cavité comprenant ladite au moins une surface incidente (11).

3. Véhicule automobile selon l'une des revendications 1 ou 2, dans lequel ladite au moins une surface incidente (11) comprend une pluralité de stries.

4. Véhicule automobile selon l'une des revendications 1 ou 2, dans lequel ladite au moins une surface incidente (11) comprend une pluralité de prismes.

5. Véhicule automobile selon l'une des revendications précédentes, dans lequel ladite diode laser (20) ou la fibre optique (21) couplée à une source laser est accouplée au dit au moins un corps transparent (10).

## Patentansprüche

1. Ein Kraftfahrzeug mit einer Beleuchtungseinrichtung und einem Dach, umfassend:
- mindestens eine Laserdiode (20) oder optische Faser (21), die mit einer Laserquelle gekoppelt ist, die so angeordnet ist, dass sie Licht emittiert; und
- mindestens einen transparenten Körper (10), der so angeordnet ist, dass er das von der Laserdiode (20) oder optischen Faser (21) emittierte Licht bricht, die mit einer Laserquelle gekoppelt ist,
mit mindestens einer Einfallsfläche (11), die so angeordnet ist, dass sie von der Laserdiode (20) oder der mit einer Laserquelle gekoppelten optischen Faser (21) emittiertes Licht empfängt, und wobei die mindestens eine Einfallsfläche (11) so angeordnet ist, dass sie kohärentes Licht in mehreren Richtungen in den mindestens einen transparenten Körper (10) lenkt
der transparente Körper (10) ferner eine Vielzahl von Emissionsflächen (12) umfasst, die so angeordnet sind, dass sie ein Bild mit einer Vielzahl von Mustern in Richtung des Innenbereichs des Horns projizieren, wobei die Emissionsflächen mindestens zwei nicht parallele planare Flächen aufweisen
**dadurch gekennzeichnet, dass**
die Beleuchtungseinrichtung es ermöglicht, Muster zu erhalten, die auf den Innenbereich des Daches des Kraftfahrzeugs projiziert werden, um ein leuchtendes Ambiente zu erzeugen, die mindestens eine Auftrefffläche (11) mindestens teilweise gekörnt ist und/oder mindestens teilweise eine arithmetische Rauheit von mindestens 0,2 Mikrometern aufweist.

2. Kraftfahrzeug nach dem vorhergehenden Anspruch, wobei der mindestens eine transparente Körper (10) einen Hohlraum umfasst, der so angeordnet ist, dass er die mindestens eine Laserdiode (20) oder optische Faser (21) aufnimmt, die mit einer Laserquelle gekoppelt ist, wobei der Hohlraum die mindestens eine Einfallsfläche (11) umfasst.

3. Kraftfahrzeug nach einem der Ansprüche 1 oder 2, wobei die mindestens eine Aufprallfläche (11) eine Vielzahl von Rillen aufweist.

4. Kraftfahrzeug nach einem der Ansprüche 1 oder 2, wobei die mindestens eine Auftrefffläche (11) eine Vielzahl von Prismen aufweist.

5. Kraftfahrzeug nach einem der vorhergehenden Ansprüche, wobei die Laserdiode (20) oder optische Faser (21), die mit einer Laserquelle gekoppelt ist, mit dem mindestens einen transparenten Körper (10) gekoppelt ist.

## Claims

1. A motor vehicle comprising an illumination device and a roof, comprising:
- at least one laser diode (20) or optical fiber (21) coupled to a laser source arranged to emit light; and
- at least one transparent body (10) arranged to refract the light emitted by the laser diode (20) or optical fiber (21) coupled to a laser source
comprising at least one incident surface (11) arranged to receive light emitted by the laser diode (20) or the optical fiber (21) coupled to a laser source, and wherein said at least one incident surface (11) is arranged to direct coherent light in a plurality of directions into said at least one transparent body (10)
said transparent body (10) further comprising a plurality of emitting surfaces (12) arranged to project toward the interior area of the horn an image with a plurality of patterns, the emitting surfaces having at least two non-parallel planar faces
**characterized in that**
the illumination device allows to obtain patterns projected onto the interior area of the roof of the motor vehicle so as to create a luminous ambiance, said at least one incident surface (11) is at least partially grained and/or has at least partially an arithmetic roughness of at least 0.2 micrometers.

2. The motor vehicle of the preceding claim, wherein said at least one transparent body (10) comprises a cavity arranged to house said at least one laser diode (20) or optical fiber (21) coupled to a laser source, the cavity comprising said at least one incident surface (11).

3. The motor vehicle of any of claims 1 or 2, wherein said at least one incident surface (11) comprises a plurality of striations.

4. The motor vehicle of any of claims 1 or 2, wherein said at least one incident surface (11) comprises a plurality of prisms.

5. The motor vehicle according to any of the preceding claims, wherein said laser diode (20) or optical fiber (21) coupled to a laser source is coupled to said at least one transparent body (10).
